# EUROPÄISCHE PATENTSCHRIFT

(11) **EP 2 021 404 B1**
(45) Veröffentlichungstag und Bekanntmachung des Hinweises auf die Patenterteilung: **29.02.2012**
(21) Anmeldenummer: 07725714.5
(22) Anmeldetag: 31.05.2007
(51) Int. Cl.: C08J 5/12, C09J 5/06, B29C 45/14

(54) **METALL-KUNSTSTOFF-HYBRID-STRUKTURBAUTEILE**
METAL/PLASTIC HYBRID STRUCTURAL PARTS
ÉLÉMENTS DE CONSTRUCTION HYBRIDES EN MÉTAL-MATIÈRE PLASTIQUE

(30) Priorität: 31.05.2006 DE 102006025745; 25.10.2006 DE 102006050144
(43) Veröffentlichungstag der Anmeldung: 11.02.2009
(73) Patentinhaber: Huntsman Advanced Materials (Switzerland) GmbH, 4057 Basel (CH); REHAU AG + Co, 95111 Rehau (DE)
(72) Erfinder: GRIEBEL, Dragan, 95111 Rehau (DE); SOMMER, Marcel, 4056 Basel (CH)
(74) Vertreter: Grünecker, Kinkeldey, Stockmair & Schwanhäusser
(86) Internationale Anmeldenummer: PCT/EP2007/004833
(87) Internationale Veröffentlichungsnummer: WO 2007/137850

(56) Entgegenhaltungen:
- EP-A- 0 439 259
- DE-A1- 4 109 397
- GB-A- 953 236
- US-A1- 2002 164 485

## Beschreibung

Die vorliegende Erfindung betrittt ein Strukturbauteil umfassend eine Metallkomponente, eine im Spritzgussverfahren an die Metallkomponente angespritzte Kunststoffkomponente und ein die Metallkomponente und die Kunststoffkomponente verbindendes Haftvermittlersystem. Die Erfindung betrifft ebenso ein Verfahren zur Herstellung dieses Strukturbauteils nach dem Oberbegriff des Anspruchs 16.

Ein gattungsgemäβes Strukturbauteil und ein Verfahren zur Herstellung desselben sind aus der DE 41 09 397 A1 bekannt.

Metall-Kunststoff-Verbundbautelle sollen die jeweiligen positiven Eigenschaften der Komponenten Metall und Kunststoff in einem Bauteil vereinigen. Bauteile aus zwei unterschiedlichen Komponenten, Metall und Kunststoff, werden hierin als "Hybrid"-Bauteile bezeichnet. Metalle und Kunststoffe sind jedoch in ihren Eigenschaften und ihrem Verarbeitungsverhalten sehr unterschiedlich und daher nicht problemios so miteinander zu verbinden, dass eine dauerhafte und belastbare Verbindung erhalten wird.

Aus DE 38 39 856 C2 ist ein Verbundbauteil bekannt, bei dem Verstärkungsrippen aus Kunststoff an einen Grundkörper aus Metall angespritzt sind. Der Metall-Grundkörper weist Durchbrüche auf, durch die der Kunststoff gespritzt ist. Es handelt sich also um eine formschlüssige Verbindung, bei der sich der Kunststoff quasi in dem Metall verhakt. Alternativ ist es bekannt, eine formschlüssige Verbindung Ober eine entsprechende Versickung der Metallkomponente zu erreichen. Derartige formschlüssige Verbindungen sind für belastete Teile hinsichtlich ihrer Verbundlestigkeit nicht zufrisden stellend. Außerdem sind die Teile korrosionsanfällig, da durch Kapillarwirkung Feuchtigkeit zwischen die Metalikomponente und die Kunststoffkomponente eindringen kann.

Bekannt ist auch, eine haftlackbeschichtete Metallkomponente in einem kontinuierlichen Prozess durch Koextrusion mit einer Kunststoffkomponente zu verbinden. Die Metalikomponente, die hierbei in Folienform vorliegt, wird vorgeheizt, so dass die Haftvermittlerschicht während des Extrudierens aktiviert wird und eine Verbindung der Metallkomponente mit der aufgebrachten Kunststoffkomponente schafft. Eine Aktivierung des Haftvermittiers erfordert die Überschreitung einer bestimmten, vom jeweils eingesetzten Haftvermittler abhängigen Temperatur. Wird diese Temperatur nicht erreicht, so resultiert eine unzureichende Verbindung zwischen den beiden Komponenten des Verbundbauteils.
Da Metalle gute Wärmeleiter sind ist die Erzielung einer ausreichenden Temperatur oft schwierig, besonders bei großen, sperrigen Teilen.

Gemäß WO 2005/032793 wird dieses Verfahren weitergebildet, indem ein mittels nachträglicher Erwärmung aktivierbarer Haftvermittler verwendet wird, d.h., es wird zuerst ein Verbundbauteil durch Spritzgießen einer Kunststoffkomponente auf eine Metallkomponente hergestellt, und anschließend wird die Metallkomponente nochmals zur Aktivierung der Haftvermittlerschicht erwärmt. Durch dieses Verfahren wird eine stoffschlüssige Verbindung zwischen Metallkomponente und Kunststoffkomponente erhalten.

Das Verfahren gemäß WO 2005/032793 ergibt eine Festigkeit der Verbindung zwischen Metall und Kunststoff, die voll ausreichend ist für Bauteile, die keinen sehr starken mechanischen Belastungen ausgesetzt sind, beispielsweise für reine Dekorbauteile. Auch für Bauteile, die zwar gewissen mechanischen Belastungen ausgesetzt sind, deren potentielles Versagen aber keine schwerwiegenden Konsequenzen nach sich zieht, können die Verbundbautelle gegebenenfalls eingesetzt werden.

Bei Strukturbauteilen, insbesondere tragenden Teilen, beweglichen Teilen und/oder sicherheitsrelevanten Teilen eines Fahrzeugs, einer Apparatur oder einer sonstigen Vorrichtung, sind jedoch Anforderungen an die Festigkeit und Zuverlässigkeit der Verbindung von Metall und Kunststoff zu stellen, die vom Stand der Technik nicht erfüllt werden können.

Aufgabe der vorliegenden Erfindung ist es daher, Strukturbauteile mit einer Metallkomponente und einer Kunststoffkomponente bereitzustellen, die dauerhaft und belastbar miteinander verbunden sind.

Aufgabe der vorliegenden Erfindung ist es insbesondere, derartige Strukturbauteile bereitzustellen, die statisch und dynamisch belastbar sind.

Aufgabe der vorliegenden Erfindung ist es ferner, derartige Strukturbauteile bereitzustellen, die eine hohe Biege- und Torsionssteifigkeit besitzen.

Aufgabe der vorliegenden Erfindung ist es auch, derartige Strukturbauteile bereitzustellen, die in korrosionsgefährdeten Bereichen einsetzbar sind. Die Aufgaben der Erfindung werden gelöst durch ein Strukturbauteil nach Anspruch 1 und ein Verfahren zur Herstellung des Strukturbauteils nach Anspruch 16. Bevorzugte Weiterbildungen der Erfindung sind Gegenstände der Unteransprüche.

Die vorliegende Erfindung betrifft ein Strukturbauteil aufweisend eine Metallkomponente, eine im Spritzgussverfahren an die Metallkomponente angespritzte Kunststoffkomponente und ein die Metallkomponente und die Kunststoffkomponente verbindendes Haftvermittlersystem, wobei das Haftvermittlersystem aus einem Kunststoff-Haftvermittler oder aus einem Kunststoff-Haftvermittler in Kombination mit einem Primer besteht, und wobei der Kunststoff-Haftvermittler ein Polyester, ein Polyurethan oder ein Epoxid ist, mit einem Dien und/oder einem Polyen modifiziert ist und teilvernetzt oder vollständig vernetzt ist.

Das erfindungsgemäße Strukturbauteil ist nach einem Verfahren erhältlich, das folgende Schritte aufweist: .
(a) Bereitstellen einer Metallkomponente, wobei die Metallkomponente an einer Seite oder an allen Seiten mit einem vorgehärteten, d.h. vorvernetzten, Haftvermittlersystem beschichtet ist,
(b) Einbringen der mit dem vorgehärteten Haftvermittlersystem beschichteten Metallkomponente in eine Gießform eines Spritzgusswerkzeugs dergestalt, dass die vorgehärtete Haftvermittlerschicht einem freien Volumen In der Gießform zugewandt ist,
(c) Spritzgießen einer Kunststoffkomponente auf die Metallkomponente, wobei das Haftvermittiersystem weiter aushärtet, und
   wobei als Haftvermittiersystem ein aus einem Kunststoff-Haftvermittler oder aus einem Kunststoff-Haftvermittler in Kombination mit einem Primer bestehendes Haftvermittlersystem verwendet wird, wobei der Kunststoff-Haftvermittler ein Polyester, ein Polyurethan oder ein Epoxid ist und mit einem Dien und/oder einem Polyen modifiziert ist.

Der Begriff "ein" ist in der vorliegenden Beschreibung und den Ansprüchen stets als "mindestens ein" zu verstehen.

Kernpunkt der vorliegenden Erfindung ist das Haftvermittlersystem. Es handelt sich um ein hitzereaktives, zweistufig härtendes (vernetzbares) System, das durch seine besondere Zusammensetzung, Insbesondere durch die Modifizierung mit Dienen und/oder Polyenen, optimal an den anzuspritzenden Kunststoff angepasst werden kann. Dadurch wird eine bisher unerreichte Haftfestigkeit durch eine stoffschlüssige Anbindung zwischen Metall und Kunststoff erzielt.

Als Metallkomponente kommen grundsätzlich alle Metalle, insbesondere die auf dem Gebiet der Strukturbautelle. üblichen Metalle wie z.B. Stahl in verschiedenen Festigkeiten, Edelstahl, Zinn, Leichtmetalle wie Aluminium und Magnesium, etc., oder eine Metalllegierung, z.B. mit Kohlenstoff, Chrom, Nickel und Molybdän in Frage. Das Metall ist vorzugsweise Stahl, der frei von einer Beschichtung oder Schmiermitteln ist.

Die Metallkomponente wird typischerweise in Form von Blechen oder zu Formteilen geformten Blechen eingesetzt.

Bevorzugte Materialien für die Kunststoffkomponente werden in Abhängigkeit von dem beabsichtigten Anwendungstemperaturbereich und in Abhängigkeit von den mechanischen Anforderungen ausgewählt. Faserverstärkte Kunststoffmaterialien, z.B. glasfaserverstärkte oder kohlefaserverstärkte Kunststoffmaterialien, garantieren eine besonders hohe Festigkeit. Es können auch Polymermaterialien mit einer niedrigen Oberflächenenergie verwendet werden, wie PE, PP, und PA.

Als Kunststoffmaterialien können Homopolymere, z.B. von PE, PP, oder PA, ein Polyolefin, ein Polyamin, ein Polystyrol, ein Polyethersulfon (PES), ein Polyethylenimin (PEI), ein Polyetherketon (PEK) oder ein Polyetheretherketon (PEEK) verwendet werden.

Das Kunststoffmaterial kann verstärkt sein mit Fasern und/oder Füllstoffen und/oder weiteren Additiven, wie Farbstoffen, Flammhemmern oder Schmelzfließverbesserern.

Falls das Kunststoffmaterial mit Fasern verstärkt ist, kann der Fasergehalt bis zu 60 Gew.% betragen.

Typische anzuspritzende Kunststoffmaterialien sind Polypropylen (PP), beispielsweise PP LGF 30, Polyamid (PA), beispielsweise PA 6 GF und PA 6.6 GF, Polyamid-Polyphenylenoxid-Blends (PA-PPO-Blends), Polyamid-Polystyrol (syndiotaktisch)-Blends (PA-sPS-Blends), Polyamid-Acrylnitril-Butadien-Styrol-Copolymerisat-Blends (PA-ABS-Blends), Polyphthalamid (PPA), Polyphenylensulfid (PPS) und Polysulfon (PSU).

In einer bevorzugten Ausführungsform ist das anzuspritzende Kunststoffmaterial PA 6 GF oder PA 6.6 GF, wobei jeweils der Glasfasergehalt etwa 30 Gew.-% beträgt.

In den obigen Bezeichnungen steht GF für Glasfaser, LGF für Langglasfaser, und die Zahl hinter LGF bedeutet den Gewichtsprozentanteil der Langglasfaser im Kunststoff. Langglasfasern werden aufgrund ihres Größenaspekts (Verhältnis von Länge zu Höhe) verwendet. Sie erhöhen die Wärmeformbeständigkeit und Schlagzähigkeit des Kunststoffs, z.B. des Polypropylens. An kurzglasfaserverstärkte (GF) Kunststoffe können bereits hohe Anforderungen an die Wärmeformbeständigkeit und das Maß an Schwindung gestellt werden; langglasfaserverstärkte Kunststoffe können noch höhere thermische und mechanische Anforderungen erfüllen. Bei PP LGF übertreffen Festigkeit und Steifigkeit die Werte von GF (Kurzfaser)-gefüllten Polypropylen-Compounds um 30%, die Kerbschlagzähigkeit sogar um bis zu 300%.

Für den Temperaturbereich von +100 ºC, d.h. für thermisch gering belastete Strukturbauteile, kann beispielsweise PP LGF 30 verwendet werden, d.h. Polypropylen mit einem Anteil von 30 Gew.-% Langglasfasern.

Für den Temperaturbereich von -40 ºC bis +120 °C bzw. +140 ºC, d.h. für thermisch höher belastete Strukturbauteile, sind in Abhängigkeit von den mechanischen Anforderungen hochwertigere Kunststoffe notwendig, wie Polyamid, z.B. PA 6 GF oder PA 6.6 GF. Polyamide (PA) vom Aminocarbonsäure-Typ entstehen aus einem Baustein durch Polykondensation oder Polymerisation (ε-Lactam), und Polyamide vom Diamin-Dicarbonsäure-Typ entstehen aus zwei Bausteinen durch Polykondensation. Codiert werden die Polyamide aus unverzweigten aliphatischen Bausteinen durch die Anzahl der Kohlenstoffatome, d.h. PA 6 ist aus Aminohexansäure (oder ε-Caprolactam) aufgebaut, und PA 6.6 ist aus Hexamethylendiamin und Adipinsäure aufgebaut.

Alternativ zu PA 6 GF und PA 6.6 GF können PA-PPO-Blends und PA-sPS-Blends verwendet werden, wobei PPO für Polyphenylenoxid steht und sPS syndiotaktisches Polystyrol bedeutet.

Für den Temperaturbereich von -40 ºC bis über +140 ºC, d.h. für thermisch hoch belastete Bauteile, sind in Abhängigkeit von den mechanischen Anforderungen und den chemischen Anforderungen Hochleistungskonstruktionskunststoffe notwendig, z.B. PPA, PPS. PPA steht für Polyphthalamid, und PPS steht für Polyphenylensulfid. Als Alternativen können auch allgemein teilaromatische Polyamide und PSU eingesetzt werden. PSU steht für Polysulfon (Poly[oxy-1,4-phenylen-sulfonyl-1,4-phenylen-oxy-(4,4'-isopropylidendiphenylen)]).

Die erfindungsgemäßen Strukturbauteile eignen sich wegen ihrer Leichtigkeit, Festigkeit und Verbindungssicherheit besonders gut für Karosseriebauteile von Fahrzeugen. Unlösbar verbundene Karosseriebauteile müssen die Anforderungen im Temperaturbereich von -40 °C bis +120 °C erfüllen. Diese Bauteile müssen die Lackieranlagen bei der Fahrzeugherstellung durchlaufen, und zwar ohne Beeinträchtigung von Funktion, Geometrie, Oberfläche, etc. Es gelten dabei die folgenden Bedingungen: Bei der katalytischen Tauchbadlackierung typischerweise 20 Minuten bei 200 °C, bei dem Füllerauftrag 30 Minuten bei 160 °C, und bei dem Decklackauftrag 30 Minuten bei 150 °C. Entsprechend muss als Kunststoffwerkstoff z.B. Polyamid, beispielsweise PA 6 GF, PA 6.6 GF zum Einsatz kommen.

Lösbar an der Grundkarosserie angeschlossene Anbauteile müssen diese mit der katalytischen Tauchbadlackierbarkeit verbundenen Anforderungen nicht notwendigerweise erfüllen. Solche Teile werden typischerweise erst nachträglich angebaut. Als Kunststoff für derartige Anbauteile eignet sich beispielsweise PP LGF.

Die Kunststoffe müssen darüber hinaus die mechanischen Anforderungen, im Wesentlichen Anforderungen an Torsion und Biegung, sowie gegebenenfalls weitere Anforderungen, z.B. chemische Beständigkeit, elektrische Leitfähigkeit, Geruchsneutralität, etc., erfüllen.

Das Haftvermiftlersystem ist ein zweistufiges Haftvermittlersystem, d.h. ein Haftvermittlersystem, das in zwei aufeinander folgenden Schritten vollständig vernetzt wird. Die Vernetzung erfolgt durch thermische Aktivierung. Das Haftvermittlersystem besteht aus dem "eigentlichen" Haftvermittler, einem Kunststoff-Haftvermittler, der alleine oder in Kombination mit einem Primer, der der besseren Aktivierung der Metalloberfläche dient, verwendet werden kann. Das Haftvermittlersystem wird auf das Blechmaterial bzw. die Metallkomponente aufgebracht und in einem ersten Schritt teilvernetzt, so dass sich eine trockene Oberfläche ausbildet, die ausreichend resistent gegen Handling-Beschädigungen ist. Beim oder nach dem Anspritzen von Kunststoff wird das Haftvermittlersystem vollständig vernetzt, so dass es seine endgültigen Eigenschaften erhält. Das vollständige Vernetzen des Haftvermittlersystems kann beispielsweise in einem Nachhärteschritt oder beim Durchgang durch die katalytische Tauchbadlackierung erfolgen. Die katalytische Tauchbadlackierung, die bei 165 bis 215°C, vorzugsweise 190 bis 200°C, durchgeführt wird, erhöht die Festigkeit und die Glasübergangstemperatur Tg des Haftvermittlersystems.

Das Haftvermittlersystem muss zum einen eine stoffschlüssige Anbindung mit dem Metallmaterial eingehen und zum anderen eine stoffschlüssige Anbindung mit dem Kunststoffmaterial eingehen. Entsprechend wird seine Materialzusammensetzung in Abhängigkeit von der Metallkomponente und der Kunststoffkomponente des Strukturbauteils, insbesondere in Abhängigkeit von der Kunststoffkomponente, gewählt.

Wenn das Haftvermittlersystem einen Primer aufweist, werden konventionelle Primer eingesetzt, wie sie in der Technik bekannt sind. Der Primer weist sowohl metallophile Gruppen auf, die für eine stoffschlüssige Anbindung an das Metall sorgen, als auch organische Gruppen, die in der Lage sind, an einen Kunststoff oder ein Material auf Kunststoffbasis, wie die Haftvermittlermatrix, anzubinden. Die Primer sind organische Verbindungen, die zur Anbindung an das Metall Hydroxy-, Thiol-, Amin- oder Carboxylgruppen besitzen. Außerdem können Metallsalze und, bevorzugter, metallorganische Verbindungen, wie z.B. funktionalisierte Eisencyclopentadienyle, eingesetzt werden. Die funktionelle Gruppe bindet an das Metall, der organische Molekülteil bindet an den Kunststoff-Haftvermittler.

Alternativ oder zusätzlich zu den genannten Primern können organofunktionalisierte Alkoxysilane, wie z.B. 3-(Trimethoxysilyl)-1-propanamin, 3-(Trimethoxysilyl)-propylmethacrylat, N-1-[3-(Trimethoxysilyl)propyl]-1,2-ethandiamine, 3-(Triethoxysilyl)-propannitrile, 3-Glycidyloxypropyl-trimethoxysilan, etc., verwendet werden. Sie werden in verdünnter Form, z.B. als 1- bis 10%ige alkoholische oder wässrige Lösung, auf die Metalloberfläche aufgebracht und zeichnen sich insbesondere dadurch aus, dass sie für eine besonders gute Verbindung zwischen den Komponenten sorgen. Die Alkoxy-Funktionalität des Silans bindet an die Metalloberfläche, und die zusätzliche Funktionalität an der organischen Gruppe bindet an die Matrix des Kunststoff-Haftvermittlers.

Außerdem können Mischungen der Silane mit Präpolymeren, beispielsweise aus Carbamaten, eingesetzt werden. Geeignete Mischungsverhältnisse (Gewichtsverhältnisse) von Silan:Präpolymer sind von 1:50 bis 1:1.

Der Primer kann, nur beispielhaft, aber nicht beschränkend, folgende Zusammensetzung haben: 3 bis 8 Gew.% 3-Glycidoxypropy-methyldimethoxysilan oder 1-[3-(Trimethoxy-silyl)propyl]urethan oder 3-(Trimethoxysilyl)propyl-methacrylat plus 2 bis 5 Gew.-% N-(2-Aminoethyl)-3-(trimethoxysilyl)propylamin oder 3-(Trimethoxysilyl)propylamin oder 3-(Trimethoxysilyl)-1-propanthiol in einem Alkohol oder Gemisch von Alkoholen, wobei Ethanol, Methanol und Isopropylalkohol bevorzugt sind. Gut geeignet ist auch eine 5 bis 15 Gew.-%-ige Lösung von N-[3-(Trimethoxysilyl)propyl]-N'-(4-vinylbenzyl)ethylendiamin-hydrochlorid in z.B. Methanol.

Auf den Primer wird der "eigentliche" Haftvermittler, der Kunststoff-Haftvermittler, aufgetragen, der zum Einen an den Primer anbindet und zum Anderen für die stoffschlüssige Anbindung an den Kunststoff sorgt. Alternativ können Primer und Kunststoff-Haftvermittler auch gemischt werden. Der "eigentliche" Haftvermittler ist nach dem Aushärten selbst ein Kunststoffmaterial. Er weist typischerweise auch metallophile Gruppen auf oder enthält Komponenten mit metallophilen Gruppen, so dass auf einen Primer verzichtet werden kann und die stoffschlüssige Anbindung an das Metall auch durch den Kunststoff-Haftvermittler erfolgen kann. Der Kunststoff-Haftvermittler wird dann direkt auf das Metall aufgetragen.

Der Kunststoff-Haftvermittler, der für die stoffschlüssige Anbindung an den Kunststoff sorgt und an den Primer und/oder die Metalloberfläche bindet, ist bevorzugt ein Polyester oder ein Polyurethan oder ein Epoxid, besonders bevorzugt ein auf Bisphenol A und/oder Bisphenol B und/oder Bisphenol C und/oder Bisphenol F basierendes Epoxidharz und/oder ein Novolak-System.

Bisphenol A ist 2,2-Bis-(4-hydroxyphenyl)-propan, Bisphenol B ist 2,2-Bis-(4-hydroxyphenyl)-butan, Bisphenol C ist 1,1-Bis-(4-hydroxyphenyl)-cyclohexan, und Bisphenol F ist 2,2-Methylendiphenol. Bisphenol A und Bisphenol B sind besonders bevorzugt. Werden sie im Gemisch eingesetzt, liegt das Gewichtsverhältnis bevorzugt im Bereich von 1:1 bis 1:10 Bisphenol A:Bisphenol B.

Die Anpassung des Haftvermittlersystems an den jeweiligen anzubindenden Kunststoff erfolgt im Wesentlichen durch Modifizierung mit Dienen, insbesondere 1,3-Dienen, oder durch Modifizierung mit Polyenen wie Naturkautschuk oder Synthesekautschuk, wobei die Diene und/oder Polyene kovalent an das Harz gebunden (in die Haftvermittlermatrix einpolymerisiert) sein können und/oder physikalisch in die Haftvermittlermatrix eingebunden (additiviert) sein können. Der Dien-Anteil und/oder Polyen-Anteil am Haftvermittlersystem beträgt bevorzugt 1 bis 30 Gew.-%, besonders bevorzugt 3 bis 10 Gew.-%.

Elastomermodifizierte Epoxidklebstoff-Haftvermittler werden beispielsweise erhalten durch Einpolymerisieren von 1,3-Butadien (kovalente Anbindung) oder durch Zugabe von Kautschuk (physikalische Einbindung, Additivierung).

Der Kunststoff-Haftvermittler ist bevorzugt der alleinige Haftvermittler. Bei Epoxidsystemen beispielsweise kann die Epoxidgruppe zur Metallaktivierung und stoffschlüssigen Anbindung an das Metall dienen.

Eine weitere Anpassung des Haftvermittlersystems an den jeweiligen anzubindenden Kunststoff ist möglich durch Zugabe von Alkyl- und/oder Aryl-modifizierten Silanen der allgemeinen Formel HO-Si(R)(R')(R"), wobei die Reste R, R' und R" gleich sein können oder teilweise oder alle ungleich mit Alkyl- und/oder Arylgruppen modifiziert sein können, wobei die Alkyl- und/oder Arylgruppen funktionelle Gruppen wie COOH, OH, NH₂ tragen. Die Silane dienen der Quervernetzung (durch die Funktionalität an der organischen Gruppe) und der Anbindung an das Metall (durch die Hydroxylgruppe am Silicium).
Die Silane sind jedoch nicht zwingend erforderlich, da die Anbindung an das Metall auch über funktionelle Gruppen an dem Kunststoff-Haftvermittler erfolgen kann.

Die stoffschlüssige Anbindung führt zu dem Entfall einer Kapillarwirkung (d.h. eines Kriechens vor. Feuchtigkeit zwischen das Kunststoffmaterial und das Metallmaterial) durch die vollflächige Verklebung zwischen dem Kunststoffmaterial und dem Metallmaterial mittels des Haftvermittlersystems. Das ermöglicht ein Umspritzen von offenen, d.h. nicht geschützten Schnittstellen und anderen ungeschützten Metallflächen mit dem Kunststoffmaterial. Solange beidseitig eine vollflächige Verklebung gegeben ist, kann außer durch Diffusion keine Feuchtigkeit an die ungeschützten Stellen gelangen, so dass eine ausreichende Korrosionsbeständigkeit realisiert ist. Selbstverständlich ist der Haftvermittler selbst korrosions-und hydrolysebeständig.

Der Haftvermittler kann gleichzeitig als Korrosionsschutz dienen, insbesondere wenn ein kunststoffbasiertes System verwendet wird, beispielsweise ein Epoxidsystem, ein Polyester- oder ein Polyurethansystem. Bei einer derartigen Auswahl des Haftvermittlers bildet der ausgehärtete Haftvermittler beim fertigen Bauteil in den Bereichen, wo er nicht von Kunststoffmaterial überdeckt ist, eine Korrosionsschutzschicht für das Metallmaterial. Es ist wichtig, dass das Haftvermittlersystem als dichte Schicht aufgebracht wird.

Wo es erforderlich ist, ist es notwendig, dass der Haftvermittler KTL-fähig ist (KTL - katalytische Tauchbad-Lackierung). Dafür sind insbesondere ausreichende Temperaturbeständigkeit und elektrische Leitfähigkeit erforderlich.

Ein elektrisch leitfähiger Haftvermittler wird durch Zugabe elektrisch leitfähiger Bestandteile erhalten. Geeignete elektrisch leitfähige Bestandteile sind, auf organischer Basis, beispielsweise Ruß und Graphit, und auf anorganischer Basis Metallpulver wie z.B. Zinkstaub. Für manche Anwendungen ist es erforderlich, dass der Haftvermittler schweißbar ist, d.h. dass die mit dem Haftvermittler beschichteten Metallteile geschweißt werden können.

Wesentliche Voraussetzungen dafür sind zum einen die elektrische Leitfähigkeit und die Temperaturbeständigkeit. Darüber hinaus sollte er nicht brennbar sein. Die Temperaturbeständigkeit wird bevorzugt durch Verwendung hoch vernetzter Epoxidsysteme auf der Basis von Bisphenol A und/oder Bisphenol B erzielt.

Die Unbrennbarkeit wird durch halogenierte Bisphenole erzielt. Beispielsweise kann der Haftvermittler auf der Basis von 2,2-Bis-(3,5-dibrom-4-hydroxyphenyl)-propan und/oder Tetrabrombisphenol A aufgebaut sein oder zusätzlich diese Bisphenole enthalten. Alternativ oder zusätzlich können herkömmliche Flammschutzmittel (halogenhaltig oder halogenfrei) dem Haftvermittler zugesetzt werden.

Insbesondere beim Aufbringen des Haftvermittlers im Coil-coating-Verfahren ist eine ausreichende Elastizität bzw. Umformbarkeit des Haftvermittlers nach dem ersten Teilvernetzungsschritt erforderlich, so dass der Haftvermittler nach dem Umformen vollflächig auch in extremen Biegungsbereichen an dem Metallmaterial anhaftet. Die Elastizität des Haftvermittlers kann beispielsweise durch eine Anbindung von Elastomer (1,3-Butadien) an den Haftvermittler oder durch eine Additivierung des Haftvermittlers mit Kautschuk erhöht werden.

Zur Verbesserung der stoffschlüssigen Anbindung an das Metall, des Korrosionsschutzes, der elektrischen Leitfähigkeit, der Temperaturbeständigkeit, der Unbrennbarkeit und der Elastizität können, je nach gewünschter Eigenschaft, die oben angegebenen Materialien einzeln oder in Kombination zugegeben werden.

Als weitere Additive können Farbstoffe zugegeben werden.

In einer bevorzugten Ausführungsform der Erfindung reagieren in einem ersten Härtungsschritt Epoxidharze, Schlagfestmacher und als Härter Amine, vorzugsweise schnell reagierende Amine, und ermöglichen es, die Klebkraft des Films (B-Stage) einzustellen.

Vorzugsweise findet in einem zweiten Härtungsschritt bei erhöhter Temperatur das abschließende Härten statt. Es ist bevorzugt, für diesen Schritt einen latenter Härter zu verwenden. Die Härtungsgeschwindigkeit dieses latenten Härters kann optional mit Beschleunigern eingestellt werden.

Im Folgenden werden bevorzugte Ausführungsformen für das Epoxidharz, den Schlagfestmacher, den Härter, den latenten Härter und weitere optionale Bestandteile des Haftvermittlers dargestellt.

### Epoxidharz

Das Epoxidharz ist vorzugsweise in einer Konzentration von 20 bis 80 Gew.%, stärker bevorzugt in einer Konzentration von 50 bis 70 Gew.% in dem Haftvermittler enthalten.

Grundsätzlich können alle in der Epoxidharztechnologie üblichen Epoxidharze in dem erfindungsgemäßen Haftvermittler verwendet werden. Es ist auch möglich, eine Mischung aus Epoxidharzen zu verwenden.

Beispiele von Epoxidharzen sind:
I) Polyglycidyl und Poly(ss-methylglycidyl)ester, erhältlich durch Umsetzen einer Verbindung mit wenigstens zwei Carboxylgruppen in dem Molekül, Epichlorhydrin und ss-Methylepichlorhydrin. Die Reaktion wird zweckdienlicher Weise in Gegenwart von Basen durchgeführt.
   Aliphatische Polycarboxylsäuren können als die Verbindung mit wenigstens zwei Carboxylgruppen in dem Molekül verwendet werden. Beispiele solcher Polycarboxylsäuren sind Oxalsäure, Bernsteinsäure, Glutarsäure, Adipinsäure, Pimelinsäure, Suberinsäure, Azelainsäure, oder dimerisierte oder trimerisierte Linolsäure.
   Es können jedoch auch cycloaliphatische Polycarboxylsäuren wie z.B. Tetrahydrophthalsäure, 4-Methyltetrahydrophthalsäure, Hexahydrophthalsäure oder 4-Methylhexahydrophthalsäure verwendet werden.
   Weiterhin können aromatische Polycarboxylsäuren wie z.B. Phthalsäure, Isophthalsäure oder Terephthalsäure verwendet werden.
II) Polyglycidyl- oder Poly(P-methylglycidyl)ether, erhältlich durch Umsetzen einer Verbindung mit wenigstens zwei freien alkoholischen Hydroxylgruppen und/oder phenolischen Hydroxylgruppen mit Epichlorhydrin oder p-Methylepichlorhydrin unter alkalischen Bedingungen oder in Gegenwart eines sauren Katalysators mit nachfolgender Behandlung mit Alkali.
   Die Glycidylether dieses Typs sind z.B. abgeleitet von acyclischen Alkoholen, z.B. von Ethylenglycol, Diethylenglycol oder höheren Poly(oxyethylen)glycolen, Propan-1,2-diol oder Poly(oxypropylen)glycolen, Propan-1,3-diol, Butan-1,4-diol, Poly(oxytetra-methylen)glycolen, Pentan-1,5-diol, Hexan-1,6-diol, Hexan-2,4,6-triol, Glycerol, 1,1,1-Trimethylolpropan, Pentaerythritol oder Sorbitol und von Polyepichlorhydrinen.
   Weitere Glycidylether dieses Typs sind abgeleitet von cycloaliphatischen Alkoholen wie 1,4-Cyclohexandimethanol, Bis(4-hydroxycyclohexyl)methan oder 2,2-Bis(4-hydroxycyclohexyl)propan oder von Alkoholen, die aromatische Gruppen und/oder weitere funktionelle Gruppen wie N,N-Bis(2-hydroxyethyl)anilin oder p,p'-Bis(2-hydroxyethylamin)diphenylmethan enthalten.
   Die Glycidylether können auch auf einkernigen Phenolen wie z.B. Resorzinol oder Hydrochinon oder auf mehrkernigen Phenolen wie z.B. Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibrom-4-hydroxyphenyl)propan basieren.
   Weitere geeignete Hydroxyverbindungen für die Herstellung von Glycidylethern sind Novolake, erhältlich durch Kondensation von Aldehyden wie Formaldehyd, Acetaldehyd, Chloral oder Furfuraldehyd, mit Phenolen oder Bisphenolen, die unsubstituiert oder substituiert durch Chloratome oder Gruppen wie z.B. Phenol, 4-Chlorphenol, 2-Methylphenyl oder 4-tert-Butylphenol.
III) Poly(N-glycidyl)verbindungen, erhältlich durch Dehydrochlorinierung der Reaktionsprodukte von Epichlorhydrin mit Aminen, die wenigstens zwei Aminowasserstoffatome enthalten. Diese Amine sind z.B. Anilin, N-Butylamin, Bis(4-aminophenyl)methan, m-Xylylendiamin oder Bis(4-methylaminophenyl)methan.
   Die Poly(N-glycidyl)verbindungen beinhalten auch Triglycidylisocyanurat, N,N'-Diglycidylderivate von Cycloalkylenharnstoffen wie Ethylenharnstoff oder 1,3-Propylenharnstoff, und Diglycidylderivate von Hydantoinen wie 5,5-Dimethylhydantoin.
IV) Poly(S-glycidyl)verbindungen, z.B. Di-S-glycidylderivate, die abgeleitet sind von Dithiolen wie z.B. Ethan-1,2-dithiol oder Bis(4-mercaptomethylphenyl)ether.
V) Cycloaliphatische Epoxidharze wie z.B. Bis(2,3-Epoxycyclopentyl)ether, 2-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es ist jedoch auch möglich, Epoxidharze zu verwenden, in denen die 1,2-Epoxygruppen an unterschiedliche Heteroatome oder funktionelle Gruppen gebunden sind; diese Verbindungen beinhalten z.B. die N,N,O-Triglycidylderivate von 4-Aminophenol, die Glycidylether-Glycidylester von Salicylsäure, N-Glycidyl-N'-(2-Glycidyloxypropyl)-5,5-dimethylhydantoin oder 2-Glycidyloxy-1,3-bis(5,5-dimethyl-1-glycidylhydantoin-3-yl)propan.

Bisphenol-Diglycidylether oder ein Epoxynovolak werden bevorzugt verwendet.

Bisphenol A-Diglycidylether oder Epoxykresolnovolake sind besonders bevorzugt.

### Schlagfestmacher (Schlagzähigkeitsmodifikator)

Der Schlagfestmacher ist wie in den folgenden Patenten EP0308664, EP0338985, EP0353190, EP0358603, EP0365479 oder EP0381625 beschrieben.

Vorzugsweise können ein Dien-Copolymer und/oder ein phenol-terminiertes Polyurethan und/oder Polyharnstoff oder eine Kombination derselben als Schlagfestmacher enthalten sein. In einer anderen bevorzugten Ausführungsform können als Schlagfestmacher ein Amino-terminiertes oder ein Carboxyl-terminiertes Butadiene-Acrylnitril enthalten sein.

### Härter

Der Härter ist vorzugsweise in einer Konzentration von 1 bis 15 Gew.%, stärker bevorzugt in einer Konzentration von 2 bis 4 Gew.% in dem Haftvermittler enthalten.

Die Härter für Epoxidharze, die zusätzlich entsprechend der vorliegenden Erfindung verwendet werden, sind vorzugsweise schnell reagierende Amine wie aliphatische, cycloaliphatische, araliphatische oder aromatische Amine, optional Imidazolingruppenenthaltende Aminoamide und deren Adukkte mit Glycidylverbindungen, die durchschnittlich mehr als zwei reaktive, aktive Wasserstoffbindungen zu Aminostickstoffatomen pro Molekül enthalten. Diese Verbindungen sind Teil des Standes der Technik und sind unter anderem beschrieben in Lee & Neville, "Handbook of Epoxy Resins", MC Graw Hill Book Company, 1987, Kapitel 6-1 bis 10-19.

Besonders bevorzugt sind Polyetheramine.

### Latenter Härter

Der latente Härter ist vorzugsweise in einer Konzentration von 1 bis 15 Gew.%, stärker bevorzugt in einer Konzentration von 5 bis 11 Gew.-% in dem Haftvermittler enthalten.

Grundsätzlich kann jede Verbindung, die für diesen Zweck bekannt ist und den Vorgaben der Verbindung entspricht, als latenter Härter verwendet werden, d.h. jede Verbindung, die inert ist im Hinblick auf das Epoxidharz unterhalb der definierten beschränkenden Temperatur von 70°C (gemessen mittels DSC bei einer Erwärmungsrate von 10°C/min), die jedoch rasch unter Vernetzung des Harzes reagiert, sobald diese beschränkende Temperatur überschritten wird. Die beschränkende Temperatur des latenten Härters, der entsprechend dieser Erfindung verwendet wird, ist vorzugsweise wenigstens 85°C, insbesondere wenigstens 100°C. Solche Verbindungen sind bekannt und kommerziell erhältlich.

Beispiele geeigneter latenter Härter sind Dicyandiamid, Cyanoguanidine wie z.B. die Verbindungen, die in US 4,859,761 oder EP-A-306451 beschrieben sind, aromatische Amine, wie z.B. 4,4'- oder 3,3'-Diaminodiphenylsulphone, oder Guanidine, wie z.B. 1-O-Tolylbiguanid, oder modifizierte Polyamine wie z.B. Ancamine@ 2014 S (Anchor Chemical UK Limited, Manchester).

Andere geeignete latente Härter sind N-Acylimidazole, wie z.B. 1-(2',4',6'-Trimethylbenzoyl)-2-phenylimidazol oder 1-Benzoyl-2-isopropylimidazol.

Solche Verbindungen sind z.B. in US 4,436,892, US 4,587,311 oder dem Japanischen Patent 743,212 beschrieben.

Weitere geeignete Härter sind Metallsalzkomplexe von Imidazolen, wie z.B. in US 3,678,007 oder US 3,677,978 beschrieben, Carboxylsäurehydrazide wie z.B. Adipinsäuredihydrazid, Isophthalsäuredihydrazid oder Anthranilsäurehydrazid, Triazinderivate wie z.B. 2-Phenyl-4,6-diamino-s-triazin(benzoguanamin) oder 2-Lauryl-4,6-diamino-s-triazin(lauroguanamin), und Melamin und dessen Derivate. Die zuletzt erwähnten Verbindungen sind z.B. in US 3,030,247 beschrieben.

Andere geeignete latente Härter sind Cyanoacetylverbindungen, wie z.B. in US 4,283,520 beschrieben, wie z.B. Neopentylglycolbiscyanoacetat, N-Isobutylcyanoacetamide, 1,6-Hexanmethylenbiscyanoacetat oder 1,4-Cyclohexandimethanolbiscyanoacetat.

Andere geeignete latente Härter sind N-Cyanoacylamidverbindungen, wie z. B. N,N'-Dicyanadipamid. Solche Verbindungen sind z. B. in US 4,529,821, US 4,550,203 und US 4,618,712 beschrieben.

Weitere geeignete latente Härter sind die in US 4,694,096 beschriebenen Acylthiopropylphenole und die Harnstoffderivate, die in US 3,386,955 offenbart sind, wie z. B. To-luen-2,4-bis(N,N-dimethylcarbamid).

Weitere geeignete latente Härter sind auch Imidazole, wie z. B. Imidazol, 2-Ethylimidazol, 2-Phenylimidazol, 1-Methylimidazol, 1-Cyanoethyl-2-ethyl-4-methylimidazol oder 2-Ethyl-4-methylimidazol.

Weitere geeignete latente Härter sind auch tertiäre Amine, wie Benzyldimethylamin oder 2,4,6-tris(Dimethylaminomethyl)phenol.

Bevorzugte latente Härter sind Diaminodiphenylsulphon, Dicyandiamid, Phenylimidazol und 2,4,6-tris(Dimethylaminomethyl)phenol.

Besonders bevorzugt ist Dicyandiamid.

### Beschleuniger für latenten Härter

Der Beschleuniger wird optional verwendet und ist in einer Konzentration von 0 bis 8 Gew.%, stärker bevorzugt in einer Konzentration von 2 bis 4 Gew.% in dem Haftvermittler enthalten.

Zweckdienlicher Weise können die erfindungsgemäßen Mischungen auch Beschleuniger für die Vernetzungsreaktion mit dem latenten Härter enthalten. Geeignete Beschleuniger sind z. B. Harnstoffderivate wie N,N-Dimethyl-N'-(3-chlor-4-methylphenyl)harnstoff (Chlortoluron), N,N-Dimethyl-N'-(4-chlorphenyl)harnstoff (Monuron) oder N,N-Dimethyl-N'-(3,4-dichlorphenyl)hamstoff (Diuron), 2,4-bis(N',N'-Dimethylureido)toluen oder 1,4-bis(N',N'-Dimethylureido)benzen. Die Verwendung dieser Verbindungen ist z. B. in der oben erwähnten US 4,283,520 beschrieben. Geeignete Beschleuniger sind z. B. auch die in der GB 1,192,790 beschriebenen Harnstoffderivate.

Andere geeignete Beschleuniger sind Imidazole, wie z. B. Imidazol, 2-Ethylimidazol, 2-Phenylimidazol, 1-Methylimidazol, 1-Cyanoethyl-2-ethyl-4-methylimidazol oder 2-Ethyl-4-methylimidazol.

Weitere geeignete Beschleuniger sind auch tertiäre Amine, deren Salze oder quartemären Ammoniumverbindungen, wie Benzyldimethylamin, 2,4,6-tris(Dimethylaminomethyl)phenol, 4-Aminopyridin, Tripentylammoniumphenolat, Tetramethylammoniumchlorid oder Benzyltributylammoniumbromid oder -chlorid; oder Alkalimetallalkoholate wie Natriumalkoholate von 2,4-Dihydroxy-3-hydroxymethylpentan.

Andere geeignete Beschleuniger sind die festen Lösungen einer Stickstoffbase und eines Phenol/Aldehyd-Harzes, wie in EP-A-200678 beschrieben und die Mannich-Basen von Polymerphenolen, wie in EP-A-351365 beschrieben.

Bevorzugte Beschleuniger sind Chlortoluron, Imidazole und Harnstoffderivate.

Besonders bevorzugt ist Chlortoluron.

### Thermoplastisches Pulver

Das thermoplastische Pulver wird optional verwendet und ist in einer Konzentration von 0 bis 7 Gew.-%, bevorzugt in einer Konzentration von 0,5 bis 3 Gew.% und stärker bevorzugt in einer Konzentration von 1 bis 2 Gew.% in dem Haftvermittler enthalten.

Weiterhin kann ein thermoplastisches Pulver, vorzugsweise ein amorphes thermoplastisches Pulver mit einem Schmelzpunkt unterhalb des Schmelzpunktes der anzuspritzenden Kunststoffkomponente, als Bestandteil des Haftvermittlers, als Füllstoff und/oder als Schlagzähigkeitsmodifikator verwendet werden. Als thermoplastisches Pulver können Homopolymere und/oder Copolymere, einschließlich Polypropylene, Polyamide, Polyamidlegierungen, Polyethylene (hoher oder niedriger Dichte)(PE), Polyphenylenoxid, PBT oder PS verwendet werden. Bevorzugt ist LD-PE. Die mittlere Teilchengröße d50 des Pulvers ist nicht größer als 50µm und vorzugsweise kleiner als 30µm.

### Lösungsmittel

Das Lösungsmittel wird optional verwendet und ist in einer Konzentration von 0 bis 66 Gew.-%, stärker bevorzugt 40 bis 60 Gew. % in dem Haftvermittler enthalten.

Als Lösungsmittel können polare oder unpolare Lösungsmittel verwendet werden. Insbesondere können ein Lösungmittel OR, worin R H, Alkyl oder Aryl ist, oder ein Lösungmittel N(R₁)(A₂), worin R₁ = H, R₂ = H; R₁ = H, R₂ = Alkyl; R₁ = H, R₂ = Aryl; R₁ = R₂ = Alkyl; und/oder R₁ = R₂ = Aryl verwendet werden. Alkyl in R, R₁ und R₂ enthält 1 bis 12 Kohlenstoffatome, vorzugsweise 1 bis 6 Kohlenstoffatome. Das Lösungsmittel ist vorzugsweise ein reaktives Lösungsmittel und verbessert die Bindung zu dem Metallsubstrat.

Weiterhin kann der Haftvermittler halogenhaltige oder halogenfreie Flammhemmer enthalten. Ferner können Farbmittel zugegeben werden.

Bevorzugte Zusammensetzungen des Haftvermittlers sind in der folgenden Tabelle 1 gezeigt. Der erfindungsgemäße Haftvermittler kann eine oder mehrere der in der Tabelle 1 aufgeführten Bestandteile in der angegebenen Konzentration enthalten. Besonders bevorzugt enthält der Haftvermittler alle aufgeführten Bestandteile in den angegebenen Konzentrationen.

**Tabelle 1: Bevorzugte Zusammensetzungen des Haftvermittlers**

| **Zusammensetzung des Haftvermittlers** | **Konzentration** | |
|---|---|---|
| | Bevorzugt | Besonders Bevorzugt |
| Epoxid (z.B. Bisphenol A, Bisphenol F, ein Novolak-System oder eine Kombination derselben) | 20-80% | |
| Härter | 1-15 % | 2-4% |
| Butandioldiglycidether | 2-15% | |
| Dien-Copolymere und/oder auf Phenol basierende Polyurethane und/oder Polyhamstoff oder eine Kombination derselben | 5-40% | 7-15% |
| Aminoterminales Butadien-Acrylnitril | 1-15% | 4-8% |
| Carboxylterminales Butadien-Acrylnitril | 1-15% | 4-8% |
| Dicyandiamid | 1-15 % | 5-11% |
| Chlortoluron | 0-8% | 2-4% |
| Thermoplastisches Pulver | 0-7% | 0,5-3% |
| Lösungsmittel (polar oder unpolar) | 0-66% | |
| Flammhemmer (halogenhaltig und/oder halogenfrei) | 0-30% | |
| Farbmittel | 0-3% | |

Die Verbindung von Metall und Kunststoff zur Herstellung der Metall-Kunststoff-Hybrid-Strukturbauteile erfolgt durch Anspritzen des Kunststoffs an die mit dem vorvernetzten Haftvermittler beschichtete Metallkomponente.

Die Beschichtung der Metallkomponente mit dem Haftvermittlersystem ist vor oder nach der Formgebung der Metallkomponente möglich. Typischerweise erfolgt die Formgebung der Metallkomponente durch Stanzen und Tiefziehen von Metallblechen. Mögliche Beschichtungsverfahren sind das sogenannte "Coil Coating" (Beschichtung vor der Formgebung), Spritzlackierung, Tauchlackierung, Pulverbeschichtung, (Beschichtung nach der Formgebung). Es ist auch ein Pinselauftrag möglich. Alternativ können die Beschichtungsverfahren in Kombination verwendet werden.

Als Lösungsmittel können in dem Beschichtungsverfahren die vorstehend definierten Lösungsmittel verwendet werden. Das Lösungsmittel dient dazu, die Viskosität der Lösung für die jeweiligen Beschichtungsverfahren anzupassen und als reaktives Lösungsmittel die Härtungszeit herabzusetzen. Ferner wird durch die Funktionalität ein höherer Grad an Vernetzung erreicht. Durch die Ausbildung polarer Gruppen mit dem Substrat wird die Trennkraft erhöht.

Wird das Haftvermittlersystem vor dem Stanzen und Tiefziehen der Bleche im Coil Coating-Verfahren aufgebracht, sind die gestanzten und tiefgezogenen Metallbauteile an ihren Schnittkanten nicht von Haftvermittler bedeckt. Möglicherweise sind sie auch in Bereichen großer Umformung nicht von Haftvermittler bedeckt.

Zur Sicherung der Korrosionsbeständigkeit ist es daher erforderlich, die Metallbereiche ohne Haftvermittler entweder nachträglich mit Haftvermittler zu versehen oder aber mit Kunststoffmaterial so zu spritzen, dass die unbedeckten Bereiche mit Kunststoffmaterial überdeckt sind, wobei das Kunststoffmaterial voll umfangmäßig um die unbedeckten Bereiche mit Haftvermittler verklebt ist. Das Coil Coating-Beschichten kann räumlich völlig getrennt von dem Stanzen und Tiefziehen erfolgen. Die im Coil Coating-Verfahren beschichteten Bleche werden anschließend für eine Zeitdauer und bei einer Temperatur erhitzt, bis eine trockene und feste Beschaffenheit des Haftvermittlersystems erreicht ist. Das Haftvermittlersystem muss soweit teilvernetzt werden, dass sich eine trockene Oberfläche ausbildet, die ausreichend resistent gegen Handling-Beschädigungen ist. Danach werden die Bleche zugeschnitten und geformt bzw. gestanzt und im Tiefziehverfahren geformt. Anschließend werden die Bleche entfettet und dann kann die Kunststoffkomponente in einem geeigneten Spritzgusswerkzeug angespritzt werden. Gegebenenfalls können danach noch ungeschützte Metallbereiche durch Lackieren, etc. mit einem Korrosionsschutz versehen werden.

In einer Abwandlung des obigen Verfahrens kann eine Tiefziehfolie zum Stanzen und Tiefziehen der Bleche verwendet werden. Die Tiefziehfolie kann im Anschluss an die Coil Coating-Beschichtung aufgezogen werden (nach der Vorvernetzung des Haftvermittlersystems) oder unmittelbar vor dem Stanzen und Tiefziehen der Bleche aufgezogen werden. Nach dem Stanzen und Tiefziehen der Bleche wird die Tiefziehfolie entfernt. Ein Entfetten der Bleche ist in diesem Fall nicht erforderlich. Dann wird in einem geeigneten Spritzgusswerkzeug die Kunststoffkomponente angespritzt. Auch hier kann es erfordedich sein, bei korrosionsgefährdeten Bauteilen anschließend Schnittkanten oder andere freie Metallbereiche mit einem Korrosionsschutz zu versehen, beispielsweise durch eine spezielle Lackierung.

Wird das Haftvermittlersystem nach der Formgebung der Metallkomponente aufgetragen, beispielsweise durch Spritzlackierung, Tauchlackierung, Pulverbeschichtung oder katalytische Tauchlackierung, kann der Korrosionsschutz des Haftvermittlersystems besser genutzt werden. Es gibt dann keine ungeschützten Schnittkanten oder Beschädigungen der Haftvermittlerschicht durch den Umformungsprozess. Die Korrosionsbeständigkeit des Haftvermittlersystems wird dann nicht nur im Bereich der Anbindung der Kunststoffkomponente genutzt, sondern auch in den Bereichen, die keinen Kontakt mit der Kunststoffkomponente haben. Dadurch kann der zusätzliche Arbeitsschritt einer Lackierung der Metallkomponente eingespart werden. Außerdem können, falls gewünscht, gezielt Bereiche, die nicht von Haftvermittlersystem überdeckt sein sollen, ausgespart werden.

Die Anhaftung des Haftvermittlersystems am Metall kann verbessert werden durch eine geeignete Vorbehandlung der Metalloberfläche, beispielsweise durch Entfettung und/oder Reinigung; durch eine mechanische Behandlung wie z.B. Strahlen oder Bürsten; durch Passivierung; durch elektrische oder physikalische Aktivierung.

Um die Klebkraft der Oberfläche des Metalls zu verbessern, kann ein Trocknungsverfahren für 10 bis 180 Minuten bei Umgebungstemperatur bis zu 150°C, vorzugsweise wenigstens 20 Minuten bei 110°C durchgeführt werden. Bei diesem Trocknungsverfahren wird das für die Beschichtung verwendete Lösungsmittel verdampft und ein erster Schritt der Vernetzung gestartet. Hierbei kann ein Härter, vorzugsweise vom Amin-Typ, verwendet werden. Aufgabe des Härters ist es, eine Additionsreaktion für die Polymerisation des Epoxids zu ermöglichen. Weiterhin wird die Klebkraft der Klebeschicht/Beschichtung reduziert, um eine Stabilität für die Handhabung zu gewährleisten. Außerdem entsteht eine starke Bindung zu dem Substrat (z.B. Metall). Diese Bindung ist so stark, dass eine Auswaschung durch das Umspritzen (z.B. Spritzgießen) verhindert wird. Es bildet sich ferner vorübergehend eine Korrosionsschutzschicht. Die Polymerisation kann stattfinden mit den polaren Gruppen z.B. des Lösungsmittels oder durch Ringöffnung unter Verbindung von z.B. einem Diepoxid und einem Diamin.

Nach der Beschichtung mit Haftvermittlersystem kann es vorteilhaft sein, die Haftvermittlerbeschichtung nachzubehandeln, beispielsweise durch Abtropfen, durch Trocknen oder durch einen Waschprozess. Anschließend erfolgt das Anbinden des Haftvermittlers, d.h. seine Teilvernetzung bis zur Handling-Festigkeit. Die benötigte Temperatur und die Zeitdauer sind abhängig von dem verwendeten Haftvermittlersystem, beispielsweise 100 °C für 30 Sekunden oder 140 °C für 40 Sekunden oder 120 °C für 20 Sekunden. Im Allgemeinen sind Temperaturen zwischen 80 und 160 °C und Zeiten zwischen 10 Sekunden und 1 Minute angemessen.

Je nach Vorhärtehärteverfahren (Mikrowelle, Induktionsofen oder Heißlufthofen, insbesondere Heißluftofen) beträgt die Dauer der Vorhärtung von 20 Sekunden bis 40 Minuten.

Das mit dem Haftvermittler beschichtete Metall kann nun zur Lagerung auf Umgebungstemperatur abgekühlt werden oder in erwärmtem Zustand weiterverarbeitet werden. Die Beschichtung stellt in diesem Stadium bereits einen Korrosionsschutz bereit.

Die mit dem vorvernetzten Haftvermittlersystem beschichtete Metallkomponente wird nun in ein geeignetes Spritzgusswerkzeug eingebracht. Die Gestalt der Gießform ist dabei der Gestalt der Metallkomponente einerseits und der gewünschten Gestalt der Kunststoffkomponente andererseits angepasst, und die Metallkomponente wird so in die Gießform eingelegt, dass die Haftvermittlerschicht einem freien Volumen in der Gießform zugewandt ist. Die Gießform kann beispielsweise so ausgebildet sein, dass Kunststoff-Versteifungsstrukturen an die Metallkomponente angespritzt werden. Es ist vorteilhaft, die Gießform auf eine definierte Temperatur, die von dem Haftvermittlersystem abhängt, vorzuwärmen. Die Vorwärmung unterstützt das hitzereaktive Verhalten des Haftvermittlersystems. Alternativ oder zusätzlich kann die Metallkomponente auf die Aktivierungstemperatur des Haftvermittlersystems vorgewärmt werden. Eine derartige Vorerwärmung kann beispielsweise extern durch Induktionsheizung, IR-Strahler, in einem Ofen, etc., oder innerhalb des Spritzgusswerkzeugs (während oder nach dem Einbringen der Metallkomponente in die Gießform) z.B. durch IR-Strahler, erfolgen. Dann wird das Kunststoffkomponenten-Ausgangsmaterial eingespritzt. Die hohe Temperatur der flüssigen Schmelze bewirkt die thermische Aktivierung, und in der Regel die vollständige Reaktion, des Haftvermittlersystems. Der Kunststoff wird dauerhaft an die Metallkomponente angebunden. Anschließend wird das erzeugte Hybrid-Strukturbauteil und das Spritzgusswerkzeug zur schnelleren Abkühlung bevorzugt gekühlt und das fertige Hybrid-Strukturbauteil aus dem Spritzgusswerkzeug entfernt.

Wird ein Haftvermittlersystem mit einer hohen Aktivierungstemperatur verwendet, kann es sinnvoll sein, nach dem Spritzgießen einen Tempervorgang des Strukturbauteils anzuschließen, um die vollständige Durchhärtung des Haftvermittlersystems und damit die zuverlässige und stabile Anbindung der Kunststoffkomponente an die Metallkomponente sicherzustellen. Dies gilt auch für mit dem Haftvermittlersystem beschichtete Bereiche, an denen kein Kunststoff angespritzt wurde, damit der Korrosionsschutz durch das Haftvermittlersystem zuverlässig gewährleistet ist.

In einer bevorzugten Ausführungsform wird durch die Verwendung von Dicyandiamid in Verbindung mit polaren Gruppen des Lösungsmittels ein Klemmsitz der anzuspritzenden Kunststoffkomponente, wie PA, erzielt. Die Härtung mit Dicyandiamid wird vorzugsweise bei etwa 150°C durchgeführt.

Generell kann das Haftvermittlersystem vollflächig oder nur bereichsweise, außerdem einseitig oder beidseitig auf den Oberflächen der Metallkomponente vorgesehen werden. Ein besonderer Vorteil des erfindungsgemäßen Haftvermittlersystems liegt darin, dass bei nur einseitiger Anbindung der Kunststoffkomponente an die Metallkomponente eine sichere, belastbare und dauerhafte Verbindung erzielt wird. Die Verbindung ist rein stoffschlüssig, und zusätzliche Sicherungen durch eine formschlüssige Verbindung von Metall und Kunststoff sind nicht erforderlich. Selbstverständlich können derartige formschlüssige Verbindungen, wenn sie bei dem entsprechenden Bauteil nicht stören, zusätzlich vorgesehen werden, beispielsweise Durchspritzungen von Kunststoffmaterial in Durchbrüche der Metallkomponente.

Da für die Verbindung von Metall und Kunststoff eine einseitige stoffschlüssige Anbindung mittels Haftvermittlersystem ausreichend ist, wird die kunststofffreie Oberfläche der Metallkomponente in ihrem Aussehen in keiner Weise beeinträchtigt. Diese Oberfläche der Metallkomponente kann daher als sichtbare, beispielsweise dekorative Fläche mit Metall- oder Lackoptik, genutzt werden. Bei der Verarbeitung eines derartigen Strukturbauteils mit Metallsichtoberfläche kann sich diese Metallsichtoberfläche (bei jeweils mit Haftvermittler behandelter Rückseite der Metallkomponente) in unterschiedlichen Bearbeitungsstadien befinden. Sie kann beispielsweise gebürstet, feingewalzt, poliert, mit kratzfestem Klarlack, oder mit Nanolack lackiert sein; sie kann mit Decklack fertig behandelt sein; oder sie kann mit einer Grundierung behandelt sein. In diesem Fall wird das fertige Strukturbauteil abschließend mit dem Decklack lackiert. So wird auch der Schutz der Schnittkanten erreicht. Zum Schutz der Metallsichtoberfläche bei der Verarbeitung, beispielsweise beim Spritzgießen, ist es sinnvoll, die Metallsichtoberfläche mit einer Schutzfolie abzudecken. Die Schutzfolie wird frühestens nach dem Spritzgießen entfernt.

Neben der Möglichkeit, eine optisch unbeeinträchtigte Metallsichtoberfläche zu schaffen, bieten die erfindungsgemäßen Hybrid-Strukturbauteile zahlreiche weitere Vorteile: Sie sind statisch und dynamisch belastbar; mit Kraft oder Drehmoment beaufschlagbar; bieten Ausfallsicherheit über die gesamte Lebensdauer des Strukturbauteils; sind für sicherheitsrelevante Teile geeignet; haben ein geringes Gewicht, aber eine hohe Biege- und Torsionssteifigkeit; sind gut gegen Korrosion geschützt; und auch für bewegliche Bauteile geeignet.

Die erfindungsgemäßen Hybrid-Strukturbauteile finden beispielsweise Anwendung im Fahrzeugbau; außerdem im Flugzeugbau, in der Raumfahrt und in Unterseebooten, als Gehäuse von Motorkleingeräten, um nur einige zu nennen.

Die Erfindung betrifft insbesondere Karosseriebauteile für Fahrzeugkarosserien, die ein erfindungsgemäß Hybrid-Strukturbauteil aufweisen. Es sei darauf hingewiesen, dass einzelne der nachfolgend zu dem Karosseriebauteil geschilderten Merkmale, die insbesondere den Aufbau des Karosseriebauteils und des entsprechenden Strukturbauteils betreffen, für sich selbst und insbesondere ohne die Merkmale des Anspruchs 1 oder des Anspruchs 8 oder mit lediglich einem Teil dieser Merkmale für erfinderisch angesehen werden. Bei Strukturbauteilen und Karosseriebauteilen im Besonderen spielt das Gewicht eine erhebliche Rolle. Andererseits sind die von dem Bauteil aufzunehmenden Belastungen erheblich und es werden erhebliche Anforderungen insbesondere auch an die Haltbarkeit der Bauteile gestellt. So wird trotz des vorangehend geschilderten Stands der Technik im Karosseriebau bei Fahrzeugen und insbesondere bei Personenkraftwägen die konventionelle zweischalige Blechbauweise praktisch ausschließlich eingesetzt. Diese Bauweise hat sich über die Jahre hinweg als kostengünstig, stabil und zuverlässig bewährt und sie wird trotz des Gewichtsnachteils weiterhin eingesetzt. Mit dem erfindungsgemäßen Strukturbauteil wird die Voraussetzung für ein Karosseriebauteil geschaffen, welches hinsichtlich der Kosten und der Zuverlässigkeit vergleichbar zu Karosseriebauteilen doppelschaliger Blechbauweise ist, welches andererseits aber eine erhebliche Gewichtseinsparung erlaubt.

Das Karosseriebauteil kann ein Strukturbauteil gemäß des der vorliegenden Erfindung oder ein gemäß der vorliegenden Erfindung hergestelltes Strukturbauteil aufweisen, welches eine Hybrid-Tragestruktur für das Karosseriebauteil darstellt.

Das Karosseriebauteil bzw. das Strukturbauteil kann gemäß der konventionellen Bauweise aufgebaut sein, wobei lackiertes Blech an der Sichtoberfläche vorgesehen ist. Es ist jedoch günstiger, von dieser konventionellen Bauweise abzuweichen und die Metallkomponente bzw. das Blech nicht an der Sichtseiten-Oberfläche vorzusehen. Es ist dann möglich, das entsprechende Bauteil so zu konstruieren, dass die Metallkomponente nur dort vorhanden ist, wo sie aus Festigkeitsgründen benötigt wird. Auf diese Weise lässt sich weiteres Gewicht einsparen.

An der Hybrid-Tragestruktur kann ein Verkleidungselement angeschlossen sein. Das Verkleidungselement kann aus Kunststoffmaterial insbesondere im Spritzgussverfahren hergestellt sein. Das Verkleidungselement kann nachträglich lackiert werden, beispielsweise in dem das Karosseriebauteil mit dem Rest der Karosserie die üblichen Lackierprozesse durchläuft, es kann auch entsprechend gefärbtes Kunststoffmaterial verwendet werden.

Das Verkleidungselement kann auch ein Strukturbauteil mit einer Metallsichtoberfläche sein. Nachdem bei einem solchen Strukturbauteil mit Metallsichtoberfläche die Metallkomponente in erster Linie optischen Zwecken dient, kann das entsprechende Metallmaterial relativ dünn ausgebildet sein, so dass entsprechende Karosseriebauteile, die sich optisch praktisch nicht von den konventionellen Karosseriebauteilen unterscheiden, dennoch eine Gewichtseinsparung ermöglichen. Generell kann die Hybrid-Tragestruktur in dem Karosseriebauteil innen liegend, nicht sichtbar bzw. lediglich teilweise sichtbar vorgesehen sein. Es ist insbesondere möglich, beidseitig Verkleidungen vorzusehen. Bei einer derartigen innenliegenden Anbringung der Hybrid-Tragestruktur sind Durchspritzungen durch das Blechbauteil insbesondere in den sichtbaren Bereichen möglich. Die Metallkomponente bzw. das Blechbauteil der Hybrid-Tragestruktur kann auch als sichtbares Bauteil ausgebildet sein. Versteifungen durch angespritzten Kunststoff sind dann jeweils nur auf der der Sichtseite entgegengesetzten Seite möglich, bzw. nur in abgedeckten Bereichen möglich, wobei auch Durchspritzungen lediglich in den abgedeckten Bereichen möglich sind. Dabei kann das Blech auf der Außenseite angeordnet sein und die Innenseite kann verkleidet sein. Das Blech kann auch auf der Innenseite angeordnet sein und die Außenseite kann verkleidet sein. Die entsprechenden Bleche können vor dem Kunststoff-Spritzprozess lackiert werden oder nach dem Kunststoff-Spritzprozess lackiert werden. Im Fall, dass sie vor dem Kunststoff-Spritzprozess lackiert werden, kann es günstig sein, eine Schutzfolie aufzubringen, die nach dem Anspritzen des Kunststoffs bzw. nach der Montage des Karosseriebauteils wieder entfernt wird.

In die Kunststoffkomponente des Strukturbauteils können Aufnahmen für Anbauteile eingeformt sein. Dabei können die Aufnahmen in der Hybrid-Tragestruktur und/oder einem Verkleidungselement vorgesehen sein. Es ist besonders günstig, die Aufnahmen so auszubilden, dass entsprechende Anbauteile nach der Verbindung von Verkleidungselementen mit der Hybrid-Tragestruktur fest gelagert sind, ohne dass es einer zusätzlichen Befestigung bedarf. Dazu kann es insbesondere günstig sein, Anlageelemente vorzusehen, die durch eine geeignete Ausbildung durch Ausnehmungen und/oder Schwächungsbereiche eine Vorspannung auf das Anbauteil im montierten Zustand ausüben, so dass dieses im montierten Zustand festgeklemmt ist.

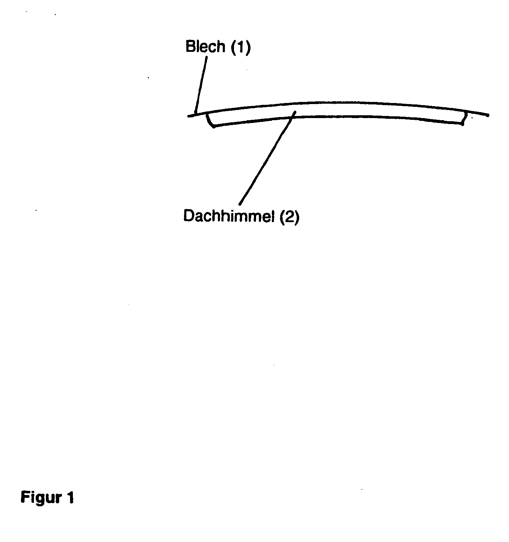

Figur 1: Draufsicht auf ein erfindungsgemäßes Strukturbauteil

Die Figur 1 zeigt ein Blech (1), an das ein Dachhimmel (2) in Form einer Kunststoffkomponente angespritzt ist.

## Patentansprüche

1. Strukturbauteil, umfassend: eine Metallkomponente, eine im Spritzgussverfahren an die Metallkomponente angespritzte Kunststoffkomponente und ein die Metallkomponente und die Kunststoffkomponente verbindendes Haftvermittlersystem, **dadurch gekennzeichnet, dass** das Haftvermittlersystem aus einem Kunststoff-Haftvermittler oder aus einem Kunststoff-Haftvermittler in Kombination mit einem Primer besteht, wobei der Kunststoff-Haftvermittler ein Polyester, ein Polyurethan oder ein Epoxid ist, mit einem Dien und/oder einem Polyen modifiziert ist und teilvernetzt oder vollständig vernetzt ist.

2. Strukturbauteil nach Anspruch 1, **dadurch gekennzeichnet, dass** der Kunststoff-Haftvermittler ein auf Bisphenol A und/oder Bisphenol B und/oder Bisphenol C und/oder Bisphenol F basierendes Epoxidharz ist.

3. Strukturbauteil nach Anspruch 1, **dadurch gekennzeichnet, dass** der Kunststoff-Haftvermittler ein auf Bisphenol A-Diglycidylether oder Epoxykresolnovolak basierendes Epoxidharz ist.

4. Strukturbauteil nach Anspruch 1 bis 3, **dadurch gekennzeichnet, dass** das Haftvermittlersystem durch kovalente Anbindung eines Diens, insbesondere eines 1,3-Diens, modifiziert ist.

5. Strukturbauteil nach einem der Ansprüche 1 bis 4, **dadurch gekennzeichnet, dass** das Haftvermittlersystem durch physikalische Einbindung eines Diens und/oder eines Polyens, insbesondere von Kautschuk, modifiziert ist.

6. Strukturbauteil nach einem der Ansprüche 1 bis 5, **dadurch gekennzeichnet, dass** der Anteil an Dien und/oder Polyen an dem Haftvermittlersystem 1 bis 30 Gew.%, bevorzugt 3 bis 10 Gew.-%, beträgt.

7. Strukturbauteil nach einem der Ansprüche 1 bis 6, **dadurch gekennzeichnet, dass** das Haftvermittlersystem außerdem durch Alkyl- und/oder Aryl-modifizierte Silane der allgemeinen Formel HO-Si(R)(R')(R") modifiziert ist, wobei die Reste R, R' und R" gleich sein können oder teilweise oder alle ungleich mit Alkyl- und/oder Aryl-Gruppen modifiziert sein können, wobei die Alkyl- und/oder Aryl-Gruppen funktionelle Gruppen wie COOH, OH, NH2 tragen.

8. Strukturbauteil nach einem der Ansprüche 1 bis 7, **dadurch gekennzeichnet, dass** das Haftvermittlersystem einen Härter enthält.

9. Strukturbauteil nach einem der Ansprüche 1 bis 8, **dadurch gekennzeichnet, dass** das Haftvermittlersystem einen Schlagfestmacher enthält.

10. Strukturbauteil nach einem der Ansprüche 1 bis 9, **dadurch gekennzeichnet, dass** das Haftvermittlersystem einen latenten Härter enthält.

11. Strukturbauteil nach Anspruch 10, **dadurch gekennzeichnet, dass** das Haftvermittlersystem einen Beschleuniger für den latenten Härter enthält.

12. Strukturbauteil nach einem der Ansprüche 1 bis 11, **dadurch gekennzeichnet, dass** das Haftvermittlersystem ein thermoplastisches Pulver enthält.

13. Strukturbauteil nach einem der Ansprüche 1 bis 13, **dadurch gekennzeichnet, dass** die Kunststoffkomponente aus einem Kunststoffmaterial besteht, das ausgewählt ist aus Polypropylen, Polyamid, Polyamid-Polyphenylenoxid-Blends, Polyamid-Polystyrol-Blends, Polyphthalamid, Polypropylensulfid und Polysulfon.

14. Strukturbauteil nach einem der Ansprüche 1 bis 14, **dadurch gekennzeichnet, dass** die Kunststoffkomponente ein faserverstärktes Kunststoffmaterial aufweist.

15. Strukturbauteil nach einem der Ansprüche 1 bis 15, **dadurch gekennzeichnet, dass** es eine Metallsichtoberfläche mit Metalloptik oder mit Lackoptik aufweist.

16. Verfahren zur Herstellung eines Strukturbauteils, das eine Metallkomponente und eine Kunststoffkomponente aufweist, folgende Schritte aufweisend:
(a) Bereitstellen der Metallkomponente, wobei die Metallkomponente an einer Seite oder an allen Seiten mit einem vorgehärteten Haftvermittlersystem beschichtet ist,
(b) Einbringen der mit dem vorgehärteten Haftvermittlersystem beschichteten Metallkomponente in eine Gießform eines Spritzgusswerkzeugs dergestalt, dass die vorgehärtete Haftvermittterschicht einem freien Volumen in der Gießform zugewandt ist,
(c) Spritzgießen der Kunststoffkomponente auf die Metallkomponente, wobei das Haftvermittlersystem weiter aushärtet,
**dadurch gekennzeichnet, dass** als Haftvermittlersystem ein aus einem Kunststoff-Haftvermittler oder aus einem Kunststoff-Haftvermittler in Kombination mit einem Primer bestehendes Haftvermittlersystem verwendet wird, wobei der Kunststoff-Haftvermittler ein Epoxid oder ein Polyurethan oder ein Polyester ist und mit einem Dien und/oder einem Polyen modifiziert ist.

17. Verfahren nach Anspruch 16, **dadurch gekennzeichnet, dass** die Metallkomponente vor Schritt (a) durch Spritzlackierung oder Tauchlackierung oder Pulverbeschichtung oder katalytische Tauchlackierung oder durch Coil Coating mit dem Haftvermittlersystem beschichtet wird.

18. Verfahren nach Anspruch 16 oder 17, **dadurch gekennzeichnet, dass** das Haftvermittlersystem vor Schritt (a) bei einer Temperatur von 100 bis 140 °C für eine Dauer von 20 bis 40 Sekunden vorgehärtet wird.

19. Verfahren nach einem der Ansprüche 16 bis 18, bei dem die Gießform vor Schritt (b) und/oder die Metallkomponente vor Schritt (c) auf eine vorbestimmte Temperatur vorgewärmt wird.

20. Verfahren nach einem der Ansprüche 16 bis 19, bei dem in Schritt (c) eine vollständige Aushärtung des Haftvermittlersystems erfolgt.

21. Verfahren nach einem der Ansprüche 16 bis 20, bei dem das Strukturbauteil nach Schritt (c) zur vollständigen Aushärtung des Haftvermittlersystems getempert wird.

22. Verfahren nach einem der Ansprüche 16 bis 21, bei dem die Kunststoffkomponente in Form einer Beschichtung aufgespritzt wird.

23. Verfahren nach einem der Ansprüche 16 bis 21, bei dem die Kunststoffkomponente in Form von Versteifungsstrukturen aufgespritzt wird.

## Claims

1. Structural part comprising a metal component, a plastics material component which is injection-moulded onto the metal component in the injection-moulding method, and a bonding agent system connecting the metal component and the plastics material component, **characterised in that** the bonding agent system consists of a plastics material bonding agent or of a plastics material bonding agent in combination with a primer, the plastics material bonding agent being a polyester, a polyurethane or an epoxide, being modified with a diene and/or a polyene, and being partially cross-linked or completely cross-linked.

2. Structural part according to claim 1, **characterised in that** the plastics material bonding agent is an epoxy resin based on bisphenol A and/or bisphenol B and/or bisphenol C and/or bisphenol F.

3. Structural part according to claim 1, **characterised in that** the plastics material bonding agent is an epoxy resin based on bisphenol A diglycidyl ether or epoxy cresol novolac.

4. Structural part according to claims 1 to 3, **characterised in that** the bonding agent system is modified by covalent bonding of a diene, in particular a 1,3-diene.

5. Structural part according to any one of claims 1 to 4, **characterised in that** the bonding agent system is modified by physically integrating a diene and/or a polyene, in particular of rubber.

6. Structural part according to any one of claims 1 to 5, **characterised in that** the proportion of diene and/or polyene in the bonding agent system is 1 to 30 % by weight, preferably 3 to 10 % by weight.

7. Structural part according to any one of claims 1 to 6, **characterised in that** the bonding agent system is additionally modified by alkyl-modified silane and/or aryl-modified silane of the general formula HO-Si(R)(R')(R"), wherein the radicals R, R' and R" may be the same or some or all of said radicals may be differently modified with alkyl groups and/or aryl groups, the alkyl groups and/or aryl groups carrying functional groups such as COOH, OH, NH₂.

8. Structural part according to any one of claims 1 to 7, **characterised in that** the bonding agent system comprises a hardener.

9. Structural part according to any one of claims 1 to 8, **characterised in that** the bonding agent system comprises a toughening agent.

10. Structural part according to any one of claims 1 to 9, **characterised in that** the bonding agent system comprises a latent hardener.

11. Structural part according to claim 10, **characterised in that** the bonding agent system comprises an accelerator for the latent hardener.

12. Structural part according to any one of claims 1 to 11, **characterised in that** the bonding agent system comprises a thermoplastic powder.

13. Structural part according to any one of claims 1 to 13, **characterised in that** the plastics material component consists of a plastics material selected from polypropylene, polyamide, polyamide-polyphenylene oxide blends, polyamide-polystyrene blends, polyphthalamide, polypropylene sulfide and polysulfone.

14. Structural part according to any one of claims 1 to 14, **characterised in that** the plastics material component comprises a fibre-reinforced plastics material.

15. Structural part according to any one of claims 1 to 15, **characterised in that** it comprises a visible metal surface having a metal appearance or a lacquer appearance.

16. Method for producing a structural part comprising a metal component and a plastics material component, comprising the following steps:
(a) providing the metal component, the metal component being coated with a precured bonding agent system on one side or on all sides,
(b) introducing the metal component coated with the precured bonding agent system into a mould of an injection mould, such that the precured bonding agent layer faces a free volume in the mould,
(c) injection moulding the plastics material component onto the metal component, the bonding agent system curing further,
**characterised in that** a bonding agent system consisting of a plastics material bonding agent or of a plastics material bonding agent in combination with a primer is used as a bonding agent system, the plastics material bonding agent being an epoxide or a polyurethane or a polyester and being modified with a diene and/or a polyene.

17. Method according to claim 16, **characterised in that** the metal component is coated with the bonding agent system before step (a) by spray painting or immersion coating or powder coating or catalytic immersion coating or by coil coating.

18. Method according to either claim 16 or claim 17, **characterised in that** the bonding agent system is precured before step (a) at a temperature of 100 to 140 °C for a period of 20 to 40 seconds.

19. Method according to any one of claims 16 to 18, wherein the mould is preheated to a predetermined temperature before step (b) and/or the metal component is preheated to a predetermined temperature before step (c).

20. Method according to any one of claims 16 to 19, wherein in step (c) complete curing of the bonding agent system takes place.

21. Method according to any one of claims 16 to 20, wherein after step (c) to completely cure the bonding agent system the structural part is tempered.

22. Method according to any one of claims 16 to 21, wherein the plastics material component is injection-moulded in the form of a coating.

23. Method according to any one of claims 16 to 21, wherein the plastics material component is injection-moulded in the form of stiffening structures.

## Revendications

1. Elément de construction comprenant un composant métallique, un composant plastique injecté sur le composant métallique lors d'un procédé de moulage par injection, et un système agent de liaison liant le composant métallique et le composant plastique, **caractérisé en ce que** le système agent de liaison est constitué d'un agent de liaison plastique ou d'un agent de liaison plastique combiné avec un primaire, dans lequel l'agent de liaison plastique est un polyester, un polyuréthanne ou un époxyde, est modifié avec un diène et/ou un polyène et réticulé partiellement ou totalement.

2. Elément de construction selon la revendication 1, **caractérisé en ce que** l'agent de liaison plastique est une résine époxy à base de bisphénol A et/ou de bisphénol B et/ou de bisphénol C et/ou de bisphénol F.

3. Elément de construction selon la revendication 1, **caractérisé en ce que** l'agent de liaison plastique est une résine époxy à base de bisphénol A-diglycidyléther ou d'époxy crésol novolac.

4. Elément de construction selon les revendications 1 à 3, **caractérisé en ce que** le système agent de liaison est modifié par une liaison covalente d'un diène, en particulier un 1,3-diène.

5. Elément de construction selon l'une quelconque des revendications 1 à 4, **caractérisé en ce que** le système agent de liaison est modifié par l'incorporation physique d'un diène et/ou d'un polyène, en particulier d'un caoutchouc.

6. Elément de construction selon l'une quelconque des revendications 1 à 5, **caractérisé en ce que** la proportion de diène et/ou de polyène dans le système d'adhésif est de 1 à 30 % en poids, de préférence de 3 à 10 % en poids.

7. Elément de construction selon l'une quelconque des revendications 1 à 6, **caractérisé en ce que** le système agent de liaison est en outre modifié par un silane modifié par un alkyle et/ou un aryle de formule générale HO-Si (R) (R') (R"), dans laquelle les résidus R, R' et R" peuvent être identiques ou peuvent être modifiés différemment de manière partielle ou totale avec des groupes alkyle et/ou aryle, les groupes alkyle et/ou aryle portant des groupes fonctionnels tels que COOH, OH, NH2.

8. Elément de construction selon l'une quelconque des revendications 1 à 7, **caractérisé en ce que** le système agent de liaison contient un durcisseur.

9. Elément de construction selon l'une quelconque des revendications 1 à 8, **caractérisé en ce que** le système agent de liaison contient un agent de résistance aux chocs.

10. Elément de construction selon l'une quelconque des revendications 1 à 9, **caractérisé en ce que** le système agent de liaison contient un durcisseur latent.

11. Elément de construction selon la revendication 10, **caractérisé en ce que** le système agent de liaison contient un accélérateur pour le durcisseur latent.

12. Elément de construction selon l'une quelconque des revendications 1 à 11, **caractérisé en ce que** le système agent de liaison contient une poudre thermoplastique.

13. Elément de construction selon l'une quelconque des revendications 1 à 12, **caractérisé en ce que** le composant plastique est constitué d'une matière plastique qui est choisie parmi un polypropylène, un polyamide, des mélanges de polyamide-oxyde de polyphénylène, des mélanges de polyamide-polystyrène, un polyphtalamide, un sulfure de polypropylène et une polysulfone.

14. Elément de construction selon l'une quelconque des revendications 1 à 13, **caractérisé en ce que** le composant plastique est une matière plastique renforcée par des fibres.

15. Elément de construction selon l'une quelconque des revendications 1 à 14, **caractérisé en ce qu'**il comprend une surface de métal visible avec un aspect métallique ou un aspect de vernis.

16. Procédé pour fabriquer un élément de construction comprenant un composant métallique et un composant plastique, comprenant les étapes suivantes consistant à :
(a) préparer le composant métallique, le composant métallique étant revêtu sur un côté ou sur tous les côtés d'un système agent de liaison prédurci,
(b) introduire le composant métallique revêtu du système agent de liaison prédurci dans un moule d'un outil de moulage par injection de manière à ce que la couche agent de liaison prédurcie soit dirigée vers un volume libre dans le moule,
(c) mouler par injection le composant plastique sur le composant métallique, le système agent de liaison étant davantage durci,
**caractérisé en ce qu'**un système agent de liaison constitué d'un agent de liaison plastique ou d'un agent de liaison plastique combiné avec un primaire est utilisé comme système agent de liaison, dans lequel l'agent de liaison plastique est un époxy ou un polyuréthane ou un polyester, et est modifié avec un diène et/ou un polyène.

17. Procédé selon la revendication 16, **caractérisé en ce que** le composant métallique est revêtu avant l'étape (a) par une peinture par projection ou par une peinture par trempe ou par un revêtement par poudre ou par une peinture par trempe catalytique ou par un couchage sur bande du système agent de liaison.

18. Procédé selon la revendication 16 ou 17, **caractérisé en ce que** le système agent de liaison est prédurci avant l'étape (a) à une température de 100 à 140 °C pendant une durée de 20 à 40 secondes.

19. Procédé selon l'une quelconque des revendications 16 à 18, dans lequel le moule est préchauffé avant l'étape (b) et/ou le composant métallique est préchauffé avant l'étape (c), à une température prédéterminée.

20. Procédé selon l'une quelconque des revendications 16 à 19, dans lequel un durcissement complet du système agent de liaison est effectué à l'étape (c).

21. Procédé selon l'une quelconque des revendications 16 à 20, dans lequel l'élément de construction est recuit après l'étape (c) pour durcir entièrement le système agent de liaison.

22. Procédé selon l'une quelconque des revendications 16 à 21, dans lequel le composant plastique sont moulé par injection sous la forme d'un revêtement.

23. Procédé selon l'une quelconque des revendications 16 à 21, dans lequel le composant plastique est moulé par injection sous la forme de structures de renfort.
